# EUROPEAN PATENT SPECIFICATION

(11) **EP 2 902 149 B1**
(45) Date of publication and mention of the grant of the patent: **22.03.2017**
(21) Application number: 12887402.1
(22) Date of filing: 29.10.2012
(51) Int. Cl.: B23K 26/38, A24C 5/14, B23K 26/00, B23K 26/067

(54) **LASER PUNCH**
LASERSTANZMASCHINE
POINÇON LASER

(43) Date of publication of application: 05.08.2015
(73) Proprietor: Japan Tobacco, Inc., Tokyo 105-8422 (JP)
(72) Inventor: ISHIKAWA, Yoshiaki, Tokyo 130-8603 (JP); MIYAGISHI, Takahiro, Tokyo 130-8603 (JP)
(74) Representative: Isarpatent
(86) International application number: PCT/JP2012/077872
(87) International publication number: WO 2014/068636

(56) References cited:
- EP-A1- 0 659 354
- EP-A1- 0 672 356
- EP-A2- 0 628 260
- WO-A1-2012/131901
- WO-A1-2012/131901
- JP-A- S5 542 200
- JP-A- S5 542 200
- JP-A- S6 120 683
- JP-A- S6 120 683
- JP-A- H03 180 290
- JP-A- H03 180 290
- JP-A- H08 276 288
- JP-A- H08 276 288

## Description

### Technical Field

The present description relates to a laser perforating machine that forms perforations in a double cigarette equivalent to two filter cigarettes in such a manner as to form the perforations for each of the two filter cigarettes. The invention is set out in the appended claim.

### Background Art

Such a filter cigarette that has vent holes for diluting mainstream smoke of a cigarette is known among filter cigarettes. Each vent hole extends through a tipping paper into a filter of the filter cigarette. Specifically, the vent holes are disposed at a position spaced apart with a predetermined distance (10 mm or more, for example) from a mouthpiece end of the filter in order for a user not to hold the vent holes into his or her mouth, and extend from an outer peripheral surface of the tipping paper into the filter in the orthogonal direction to an axis of the filter cigarette, that is, in the radial direction of the filter cigarette (see FIG. 1 of Patent Document 1, for example).

In order to enhance manufacturing efficiency of the filter cigarettes, it is preferable not to form the vent holes in an individual filter cigarette, but to form the vent holes in a double filter cigarette. The double filter cigarette is equivalent to two filter cigarettes, and includes two cigarettes, a double filter disposed between these cigarettes, and a double tipping paper for integrally combining these cigarettes with the double filter.

Thereafter, such a double filter cigarette is evenly cut into two at a cutting position defined at a center of the double filter, thereby forming two filter cigarettes from the double filter cigarette. Hence, cutting of the double filter cigarette provides a mouthpiece end for each filter of the respective filter cigarettes.

The above described vent holes can be formed by a laser perforating machine using laser beams, and this laser perforating machine is disposed in a conveyance path of the double filter cigarette. Specifically, with respect to the double filter of the double filter cigarette, the laser perforating machine has a left laser-beam emitting port allowing a laser beam to emit therefrom, the left laser-beam emitting port being located on a left part side of the double filter leftward of the cutting position so as to radiate the laser beam to the left part of the double filter from the left laser-beam emitting port, and a right laser-beam emitting port allowing a laser beam to emit therefrom, the right laser-beam emitting port being located on a right part side of the double filter rightward of the cutting position so as to radiate the laser beam to the right part of the double filter from the right laser-beam emitting port.

As described above, the laser perforating machine radiates two or more laser beams through the double tipping paper to the double filter, and each laser beam forms vent holes for each of the filter cigarettes. Specifically, each of the two or more laser beams orthogonally intersects the axis of the double filter cigarette, and the radiating position of each laser beam is spaced apart with a predetermined distance from the cutting position of the double filter.

### Prior Art Document

### Patent Document

Patent Document 1: Japanese Patent Laid-Open No. 7-67613
EP-A-0659354 A1 discloses a method and machine whereby a succession of double cigarettes each consisting of two cigarette portions connected by a double filter, is fed, in a direction perpendicular to the longitudinal axis of the double cigarettes through a cutting unit wherein each double cigarette is cut into two single cigarettes which are fed through a perforating unit before being separated axially, and, as they are being perforated, are rotated about their axis by respective rotation devices.
EP-A-0672356 A1 discloses a method and machine whereby a succession of double cigarettes each consisting of two cigarette portions connected by a double filter, is fed, crosswise to the longitudinal axis of the double cigarettes, through a perforating unit by which the double cigarettes are rotated about their axis by respective rotation devices to form a number of ventilation holes and a succession of ventilated double cigarettes, which is fed through a cutting station where each ventilated double cigarette is cut into two ventilated single cigarettes.

### Summary of the Invention

The present invention is set out in the appended claims. The embodiments, aspects or examples according to the present description that do not fall within the scope of said claims are provided for illustrative purposes only and do not form part of the present invention.

### Problems to be solved by the Invention

A new type of filter cigarettes have been in development that have perforations in the vicinity of mouthpiece ends of filters instead of or along with the aforementioned vent holes. In the case of filter cigarettes of this type, each perforation has an open end opening to a tipping paper in the vicinity of the mouthpiece end, and extends from the open end toward a cigarette in a state of tilting to an axis of the filter cigarette.

The purpose of such perforations is not dilution of mainstream smoke, but to release a part of the mainstream smoke from the open ends of the perforations into a user's mouth, thereby encouraging dispersion of the mainstream smoke in the user's mouth to provide a user with a new smoking feeling.

Since each laser beam radiated from the above described laser perforating machine orthogonally intersects the axis of the double filter cigarette, it is impossible to form perforations tilting to the axis of the double filter cigarette.

In order to form the above perforations, it is required to determine a radiating position of each laser beam in the vicinity of the cutting position of the double filter (within a range of less than 10 mm apart from the cutting position, for example) in a manner as to form each perforation extending from the open end toward the cigarette in a state of tilting to the axis of the double filter. Hence, for a laser perforating machine having a structure of respectively radiating laser beams to the left part and the right part of the double filter from the left laser-beam emitting port and the right laser-beam emitting port respectively located on the left part side and the right part side of the double filter, it is very difficult to form perforations tilting in the above manner.

An object of the present invention is to provide a laser perforating machine having a simple structure and capable of radiating laser beams suitable for forming the aforementioned perforations in a double filter cigarette.

### Means for Solving the Problems

The above object is achieved by a laser perforating machine according to claim 1, and a double filter cigarette is treated as a perforating target in the laser perforating machine. The double filter cigarette includes a double filter disposed between two cigarettes, and the cigarettes and the double filter are combined by wrapping of a double tipping paper therearound.

The laser perforating machine includes a laser-beam radiating device that converges laser beams respectively to a left part and a right part of the double filter, into which the double filter is divided at a cutting position of the double filter, during conveyance of the double filter cigarette along a conveyance path.

The laser-beam radiating device comprises: a left-sided laser-beam radiating unit that includes a left laser-beam emitting port so located on a left part side of the double filter as to allow a laser beam to emit therefrom, and converges the laser beam to the right part of the double filter through the left laser-beam emitting port when the double filter cigarette is located at a perforating position defined in the conveyance path, thereby forming perforations tilting to an axis of the double filter cigarette into the right part; and
a right-sided laser-beam radiating unit that includes a right laser-beam emitting port so located on a right part side of the double filter as to allow a laser beam to emit therefrom, and converges the laser beam to the left part of the double filter through the right laser-beam emitting port when the double filter cigarette is located at the perforating position, thereby forming perforations tilting to the axis into the left part.

According to the aforementioned laser perforating machine, by employing such a simple structure that respectively radiates the laser beams reversely tilting to each other from the left and the right laser-beam emitting ports, it is possible to form a respective perforation tilting to the axise of the double filter cigarette into each of the left and the right parts of the double filter.

For example, the left-sided laser-beam radiating unit converges the laser beam to the right part of the double filter within a range of less than 10 mm apart from the cutting position, and the right-sided laser-beam radiating unit converges the laser beam to the left part of the double filter within a range of less than 10 mm apart from the cutting position.

Each of the left-sided laser-beam radiating unit and the right-sided laser-beam radiating unit may include: a converging lens that converges the laser beam; and an angle setting mirror that reflects the laser beam in a manner as to radiate the laser beam tilting to the axis of the double filter cigarette. The converging lens converges the laser beam toward the outer peripheral surface of the double filter, and the angle setting mirror reflects the laser beam to irradiate the double filter of the double filter cigarette with the laser beam.

In this case, each angle setting mirror preferably includes two or more mirrors. If the angle setting mirror is constituted of two or more mirrors, it is possible to reduce the reflecting area of the laser beam required in each individual mirror for forming the tilted perforations. This contributes to reduction in space for installing the individual mirrors to be placed between the converging lens and the corresponding laser-beam emitting port, thereby downsizing the laser perforating machine.

Preferably, the angle setting mirrors of the left-sided laser-beam radiating unit and the right-sided laser-beam radiating unit are so arranged as to prevent the respective optical paths of the left-sided laser-beam radiating unit and the right-sided laser-beam radiating unit from intersecting each other. In this case, the laser beams propagating along the respective optical paths are unlikely to interfere with each other.

The laser perforating machine further comprises a rotating unit that rotates the double filter cigarette around the axis, and the left-sided laser-beam radiating unit and the right-sided laser-beam radiating unit respectively radiate the laser beams in a pulse fashion. In this case, in accordance with rotation of the double filter cigarette, the perforations are formed at intervals in the peripheral direction of the double filter cigarette, and these perforations are formed into perforation rows respectively in the left and the right parts of the double filter.

The laser perforating machine may further comprise a pressing device that presses the double filter against the conveyance path when the double filter cigarette is rotated around its axis. Such a pressing device is useful to maintain a constant distance between the double filter and each of the left-sided and the right-sided laser-beam radiating units during the rotation of the double filter cigarette, and also prevents meandering of each perforation row.

For example, the aforementioned rotating unit includes a pair of rotary cams that hold the cigarettes of the double filter cigarette between the conveyance path and the respective rotary cams at the perforating position, and rotate the double filter cigarette at a peripheral speed identical with a conveyance speed of the double filter cigarette on the conveyance path in a direction of moving upstream of the conveyance path.

In this case, the pressing device includes a pair of rollers or extensions of the rotary cams for rotatably contacting the respective left and right parts of the double filter.

### Advantageous Effects of the Invention

The laser perforating machine of the present invention has such a simple structure that radiates the laser beams reversely tilting to each other to the right and the left parts of the double filter in the double filter cigarette respectively from the left laser-beam emitting port and the right laser-beam emitting port, thereby forming the perforations tilting to the axis of the filter cigarette into each filter of the respective filter cigarettes.

### Brief Description of the Drawings

FIG. 1 is a schematic view showing a laser perforating machine according to a first embodiment of the present description.
FIG. 2 is an enlarged view showing perforations formed in a double filter in FIG. 1.
FIG. 3 is a diagram showing optical paths of branched laser beams in FIG. 1 viewed from the side of a perforating drum.
FIG. 4 is a diagram explaining a layout of a rotary cam, the double filter cigarette and the perforating drum in FIG. 1.
FIG. 5 is a diagram explaining an operation of the rotary cam relative to the double filter cigarette; and (A) to (D) show a sequential order of conveyance of the double filter cigarette.
FIG. 6 is a schematic view showing the laser perforating machine according to a second embodiment of the present description.
FIG. 7 is a schematic view showing the laser perforating machine according to a third embodiment of the present description
FIG. 8 is a drawing explaining one of factors to meander a perforation row.
FIG. 9 is a drawing showing a perforation row formed on a tipping paper without being meandered.
FIG. 10 is a drawing showing a meandered perforation row formed on a tipping paper.
FIG. 11 is a schematic view showing the laser perforating machine according to a fourth embodiment of the present description.
FIG. 12 is a schematic view showing the laser perforating machine according to a fifth embodiment of the present description.

### Mode for Carrying out the Invention

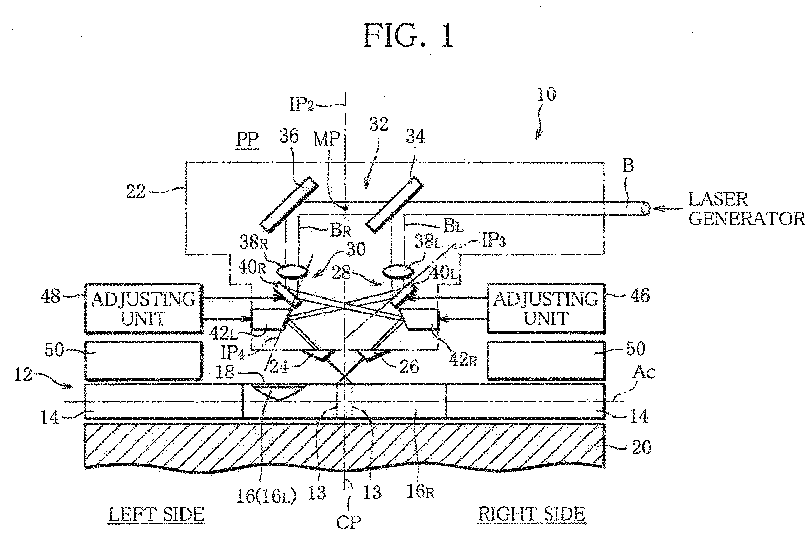

FIG. 1 schematically shows a laser perforating machine 10 according to the first embodiment of the present description, and the laser perforating machine 10 forms two perforation rows 13 in a double filter cigarette (hereinafter referred to as a "W cigarette") 12. The perforation rows 13 will be described later.

As apparent from the above description, the W cigarette 12 is formed by integrally combining two cigarettes 14 with a double filter 16 through wrapping of a double tipping paper 18 around them.

The W cigarette 12 is conveyed along a conveyance path in the orthogonal direction to an axis A_{C} of the W cigarette 12. Specifically, the conveyance path is defined by a plurality of rotatable grooved drums, these grooved drums are sequentially arranged in a row in the conveyance direction of the W cigarette 12, and the W cigarette 12 is conveyed along the conveyance path in such a manner that the W cigarette 12 is sequentially transferred from an upstream grooved drum to another downstream grooved drum. It should be noted that FIG. 1 shows only a section of an outer peripheral portion of a perforating drum 20 which is one of the grooved drums.

The conveyance path has a perforating position PP defined by a predetermined rotational angle position of the perforating drum 20, and the laser perforating machine 10 is arranged at the perforating position PP. Specifically, the laser perforating machine 10 may include a housing 22 indicated by a dot and dash line in FIG. 1, and the housing 22 has a lower surface that is positioned in a radial direction of the perforating drum 20, for example, upwardly apart from the outer periphery of the perforating drum 20, and faces to the outer peripheral surface of the perforating drum 20.

The lower surface of the housing 22 is provided with a left laser-beam emitting port 24 and a right laser-beam emitting port 26 for allowing laser beams to emit therefrom, respectively. If the double filter 16 in the W cigarette 12 is divided into a left part 16_{L} located on the left side, and a right part 16_{R} located on the right side relative at a cutting position CP defined at a center of the double filter 16 with reference to FIG. 1, the left laser-beam emitting port 24 is capable of radiating a laser beam toward the right part 16_{R} although the left laser-beam emitting port 24 is located on the left part 16_{L} side of the double filter 16, as apparent from FIG. 1.

On the other hand, the right laser-beam emitting port 26 is capable of radiating a laser beam toward the left part 16_{L} of the double filter 16 although the right laser-beam emitting port 26 is located on the right part 16_{R} side of the double filter 16.

The left laser-beam emitting port 24 constitutes a part of a left-sided laser-beam radiating unit 28 that is a part of a laser-beam radiating device, and the right laser-beam emitting port 26 constitutes a part of a right-sided laser-beam radiating unit 30 that is a part of the laser-beam radiating device. These left-sided and right-sided laser-beam radiating units 28, 30 receive respective branched laser beams from a laser splitter 32, for example, and the respective branched laser beams are allowed to emit from the corresponding laser-beam emitting ports 24, 26.

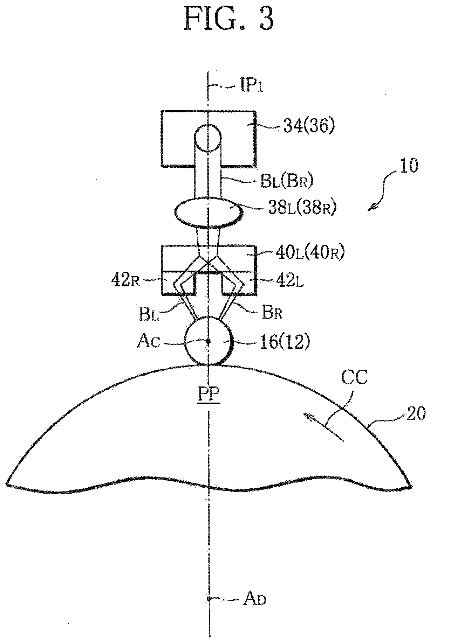

The laser splitter 32 includes a half mirror 34 and a reflecting mirror 36 that are stored in the housing 22, and the half mirror 34 and the reflecting mirror 36 are located in a first plane IP₁ including both the axis A_{C} of the W cigarette 12 located at the perforating position PP, that is, the axis Ac of the W cigarette 12 as an irradiation target, and an axis A_{D} of the perforating drum 20 (see FIG. 3); and these mirrors are spaced apart from each other in the direction of the axis A_{C}, as well, for example. In the case of the present embodiment, the half mirror 34 is disposed on the right laser-beam emitting port 26 side, and the reflecting mirror 36 is disposed on the left laser-beam emitting port 24 side.

The laser splitter 32 includes a laser generator disposed outside the housing 22, and the laser generator generates a laser beam B in a pulse fashion along the axis A_{C} of the W cigarette 12 as the irradiation target toward the half mirror 34. For example, the laser beam B has a beam diameter of approximately 8 to 15 mm, for example. In addition, it is preferable to set the laser beam B to have a beam diameter of 12 to 15 mm in order to enhance convergence of the laser beam B, and facilitate formation of deeper perforations.

The half mirror 34 receives the laser beam B from the laser generator, and reflects a part of the received laser beam B as a branched laser beam B_{L} toward the left-sided laser-beam radiating unit 28. On the other hand, the rest of the laser beam B passes through the half mirror 34 to the reflecting mirror 36, and then the reflecting mirror 36 reflects the rest of the laser beam B as a branched laser beam B_{R} toward the right-sided laser-beam radiating unit 30. This means that the laser splitter 32 splits the laser beam B into the branched laser beams B_{L}, B_{R} that are parallel to each other, and respectively travel in the radial direction of the perforating drum 20.

If viewed in FIG. 1, the left-sided laser-beam radiating unit 28 includes a converging lens 38_{L}, a first mirror 40_{L}, and a second mirror 42_{L} below the half mirror 34; the lens and the mirrors define an optical path of the branched laser beam B_{L} extending from the half mirror 34; and this optical path extends through the left laser-beam emitting port 24, and eventually reaches an outer peripheral surface of the right part 16_{R} of the double filter 16 in the W cigarette 12 as the irradiation target.

In the present embodiment, an angle setting mirror of the left-sided laser-beam radiating unit is formed of the first mirror 40_{L} and the second mirror 42_{L}. As apparent from FIG. 3, the converging lens 38_{L} is disposed in the above described first plane IP₁, and has a focus distance of 50 to 120 mm, for example.

The first mirror 40_{L} is disposed below the converging lens 38_{L}, and the second mirror 42_{L} is disposed on the reflecting mirror 36 side and below the first mirror 40_{L}, so that a plane IP₃ including a reflecting surface of the first mirror 40_{L} opposesa plane IP₄ including a reflecting surface of the second mirror 42_{L} each other. In this case, the first mirror 40_{L} reflects the branched laser beam B_{L} passing through the converging lens 38_{L} toward the second mirror 42_{L}, and the second mirror 42_{L} reflects the branched laser beam B_{L} from the first mirror 40_{L} via the left laser-beam emitting port 24 toward the right part 16_{R} of the double filter 16.

More specifically, the second mirror 42_{L} reflects the branched laser beam B_{L} received from the first mirror 40_{L} toward the axis A_{C} of the W cigarette 12, and by means of this reflection, the branched laser beam B_{L} is converged via the left laser-beam emitting port 24 onto the outer peripheral surface of the double tipping paper 18, that is, the right part 16_{R} of the double filter 16 in the W cigarette 12 as the irradiation target. For example, the branched laser beam B_{L} has a spot diameter of 300 µm or less on the outer peripheral surface of the double tipping paper 18.

If viewed in FIG. 1, the right-sided laser-beam radiating unit 30 includes a converging lens 38_{R}, a first mirror 40_{R}, and a second mirror 42_{R}, which are similar to the converging lens 38_{L}, the first mirror 40_{L}, and the second mirror 42_{L}, below the reflecting mirror 36; the lens and the mirrors define an optical path of the branched laser beam B_{R} extending from the reflecting mirror 36; and this optical path extends through the right laser-beam emitting port 26, and eventually reaches the outer peripheral surface of the double tipping paper 18, that is, the left part 16_{L} of the double filter 16 in the W cigarette 12 as the irradiation target. In the present embodiment, an angle setting mirror of the right-sided laser-beam radiating unit is formed of the first mirror 40_{R} and the second mirror 42_{R}.

The converging lens 38_{R} is disposed in the above described first plane IP₁ below the reflecting mirror 36, and has a focus distance of 50 to 120 mm, which is the same as that of the converging lens 38_{L}.

The first mirror 40_{R} is disposed below the converging lens 38_{R}, and the second mirror 42_{R} is disposed on the half mirror 34 side and below the first mirror 40_{R}, so that a plane (not shown) including a reflecting surface of the first mirror 40_{R} opposes a plane (not shown) including a reflecting surface of the second mirror 42_{R} each other. In this case, the first mirror 40_{R} reflects the branched laser beam B_{R} passing through the converging lens 38_{R} toward the second mirror 42_{R}, and the second mirror 42_{R} reflects the branched laser beam B_{R} from the first mirror 40_{R} via the right laser-beam emitting port 26 toward the left part 16_{L} of the double filter 16.

The second mirror 42_{R} reflects the branched laser beam B_{R} received from the first mirror 40_{R} toward the axis A_{C} of the W cigarette 12, and by means of this reflection, the branched laser beam B_{R} is converged via the right laser-beam emitting port 26 onto the double tipping paper 18, that is, the left part 16_{L} of the double filter 16 in the W cigarette 12 as the irradiation target. In this case, the branched laser beam B_{R} has a spot diameter of 300 µm or less on the outer peripheral surface of the double tipping paper 18.

As apparent from the above description and FIG. 1, the converging lens 38_{L}, the first mirror 40_{L}, and the second mirror 42_{L} in the left-sided laser-beam radiating unit 28 are arranged to be symmetrical to the converging lens 38_{R}, the first mirror 40_{R}, and the second mirror 42_{R} in the right-sided laser-beam radiating unit 30 with respect to a second plane IP₂ including both the cutting position CP of the W cigarette 12 and an intermediate position MP between the half mirror 34 and the reflecting mirror 36.

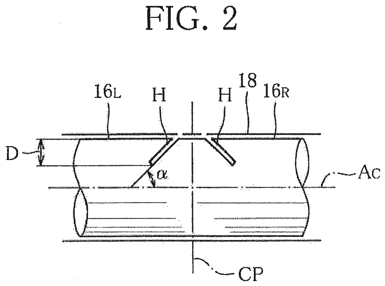

When the branched laser beams B_{L}, B_{R} are radiated onto the respective outer peripheral surfaces of the left and the right parts 16_{L}, 16_{R} of the double filter 16, these branched laser beams B_{L}, B_{R} respectively form perforations H in the left and the right parts 16_{L}, 16_{R} through the double tipping paper 18, as shown in FIG. 2.

These perforations H are formed with the cutting position CP of the W cigarette 12 located therebetween in such a manner that each perforation H tilts to the axis A_{C} of the W cigarette 12 at a tilt angle α of 30 to 45°, for example, and has a depth D of approximately 2 mm, for example. Specifically, each perforation H has an open end opening to the outer peripheral surface of the double tipping paper 18 in the vicinity of the cutting position CP, and also has a bottom located apart from the open end toward the corresponding cigarette 14 in the double filter 16. The perforations H may be connected to each other, or may have no bottoms in the double filter 16.

As apparent from the above description, the laser perforating machine 10 according to one embodiment of the present description has been made based on a unique idea, which would not have been conceived at all by those having ordinary skill in the art, such that with respect to the left and the right filter cigarettes into which the W cigarette 12 is divided at the cutting position CP, the laser-beam emitting port 24 for the branched laser beam B_{L} in combination with the right filter cigarette is located on the left filter cigarette side, and the laser-beam emitting port 26 for the branched laser beam B_{R} in combination with the left filter cigarette is located on the right filter cigarette side.

Based on the above idea, there is provided the laser perforating machine 10 having such a simple and unique structure that disposes the first and the second mirrors 40_{L}, 42_{L} between the half mirror 34 and the W cigarette 12 as the irradiation target, and also disposes the first and the second mirrors 40_{R}, 42_{R} between the reflecting mirror 36 and the W cigarette 12 as the irradiation target, thereby readily defining the optical path of the branched laser beam B_{L} extending from the half mirror 34 to the W cigarette 12 as well as the optical path of the branched laser beam B_{R} extending from the reflecting mirror 36 to the W cigarette 12.

The laser perforating machine 10 having the above unique structure is capable of respectively forming the tilted perforations H in the outer peripheral surfaces of the left and the right parts 16_{L}, 16_{R} of the double filter 16, that is, in the respective filters of the left and the right filter cigarettes through the tipping paper.

The above described unique structure enables each radiating position of the branched laser beams B_{L}, B_{R} to be within a range of less than 10 mm apart from the cutting position CP of the double filter 16.

For example, it is possible to define each radiating position of the branched laser beams B_{L}, B_{R} at a position not more than 5.0 mm, more strictly, not more than 3.0 mm apart from the cutting position CP. The left and the right filter cigarettes are obtained by cutting the W cigarette 12 with a pair of perforation rows 13 at the predetermined cutting position CP.

Each filter cigarette obtained in this manner has the perforations H in the vicinity of its mouthpiece end of the filter; therefore, it is easy for a user to position the open ends of the perforations H in his or her mouth when the user holds the filter with his or her mouth, and it is possible to effectively release the mainstream smoke in the user's mouth because of the perforations H extending from the open ends toward the cigarette in a state of tilting to the axis of the W cigarette 12.

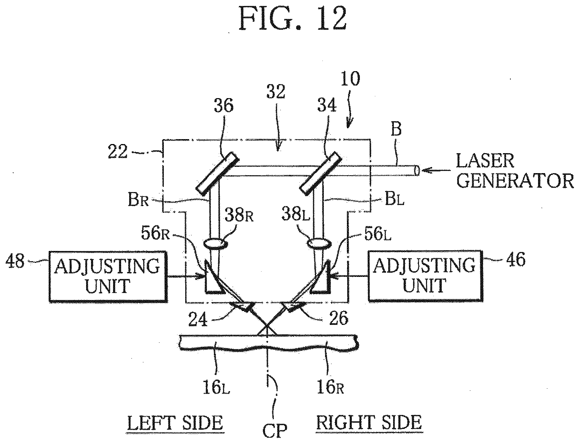

In the present embodiment, the respective branched laser beams B_{L}, B_{R} are reflected on the first and second mirrors 40, 42 on the corresponding sides before reaching the double filter 16. Hence, compared to another embodiment having only a single mirror between each converging lens 38 and each laser-beam emitting port on its corresponding side, as shown in FIG. 12, it is possible to reduce each angle of incidence and reflection of the branched laser beam B_{L}, B_{R} required in the first and the second mirrors 40, 42, that is, a reflective area thereof where the perforations H tilted at the tilt angle α are formed.

Accordingly, in the radial direction of the perforating drum 20, it is possible to reduce arrangement space for the first and the second mirrors 40, 42, thereby downsizing the laser perforating machine 10. Another embodiment of FIG. 12 will be described later.

Furthermore, in the case of the present embodiment, it is apparent from FIG. 3 that, in the optical paths of the branched laser beams B_{L}, B_{R}, respective parts of the two optical paths extending from the first mirrors 40_{L}, 40_{R} to the W cigarette 12 do not intersect with each other. Specifically, if viewed in FIG. 3, the respective parts of the two optical paths once go apart from each other in the conveyance direction CC of the W cigarette 12, and thereafter, they go closer to each other toward the outer periphery of the W cigarette 12, thereby allowing the branched laser beams B_{L}, B_{R} to respectively radiate onto the double filter 16 of the W cigarette 12 as the irradiation target.

In order to prevent the respective parts of the optical paths between the first mirrors 40_{L}, 40_{R} and the W cigarette 12 from intersecting each other, the reflective surfaces of the first mirrors 40_{L}, 40_{R} are so arranged as not to rightly face each other, but as to deviate from each other in the conveyance direction CC of the W cigarette 12 as the irradiation target.

As apparent from FIG. 1, in the optical paths of the branched laser beams B_{L}, B_{R}, the optical path from the half mirror 34 to the first mirror 40_{L} and the optical path from the reflecting mirror 36 to the first mirror 40_{R} deviate from each other in the direction of the axise A_{C} of the W cigarette 12; therefore, these optical paths do not intersect each other, as well.

Since the optical paths of the branched laser beams B_{L}, B_{R} do not intersect each other, the branched laser beams B_{L}, B_{R} are unlikely to interfere with each other. Hence, such interference hardly causes bad influences on the formation of the perforations H.

In the present embodiment, the first mirror 40_{L} and the second mirrors 42_{R} are respectively coupled to an adjusting unit 46, and the first mirror 40_{R} and the second mirror 42_{L} are respectively coupled to an adjusting unit 48. These adjusting units 46, 48 separately adjust each position and angle of the first mirrors 40 and the second mirrors 42, thereby providing fine adjustment of the position, the tilt angle α and the depth D of the perforations H. Accordingly, the adjusting units 46, 48 contribute to accurate formation of the perforations H, and also enables easy adjustment for change in size and position of the perforations H.

When reaching the perforating position PP, the W cigarette 12 temporarily stays at the perforating position PP regardless of rotation of the perforating drum 20, and rotates around its own axis A_{C}. Hence, while the W cigarette 12 is rotating on its own axis, the branched laser beams B_{L}, B_{R} are intermittently radiated onto the right part 16_{R} and the left part 16_{L} of the double filter 16, respectively.

As a result, the branched laser beams B_{L}, B_{R} respectively form sequential perforations H with intervals in the peripheral direction of the double filter 16, thereby obtaining the above described two perforation rows 13 in the double filter 16 through the double tipping paper 18. The double tipping paper 18 may have at least one vent hole row at a position at least 10 mm or more apart from the cutting position CP in advance.

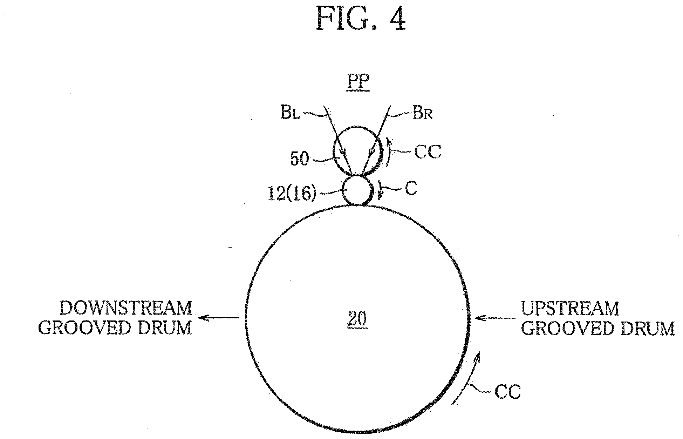

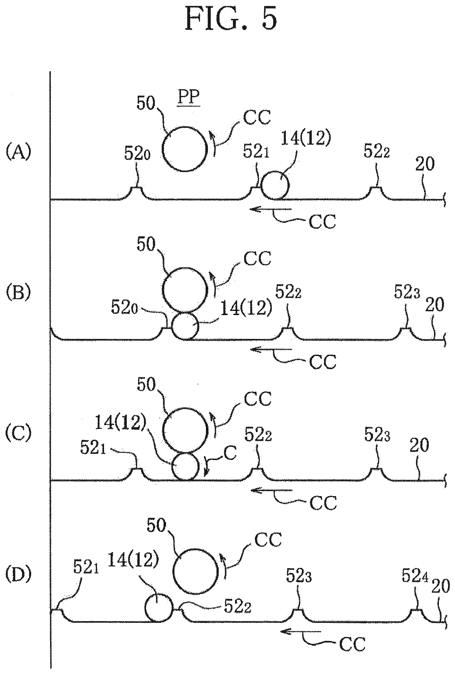

In order to attain the temporary stay and the rotation of the W cigarette 12, the laser perforating machine 10 of the present embodiment further comprises a rotating unit. The rotating unit will be described as below with reference to FIG. 4 and FIG. 5.

The rotating unit includes a pair of rotary cams 50 disposed at the perforating position PP. These rotary cams 50 are formed in a roller shape, and are disposed at both sides of the housing 22, as apparent from FIG. 1. When the W cigarette 12 reaches the perforating position PP, the cigarettes 14 of the W cigarette 12 are held between the corresponding one of the rotary cams 50 and the outer peripheral surface of the perforating drum 20.

The rotary cams 50 rotate at a peripheral speed in accordance with the conveyance speed of the W cigarette 12, that is, the peripheral speed of the perforating drum 20, in the same rotational direction CC as the rotational direction CC of the perforating drum 20 if viewed in FIG. 4. Hence, the rotary cams 50 and the perforating drum 20 cooperate with each other so as to rotate the W cigarette 12 held between the rotary cams 50 and the perforating drum 20 in a rotational direction C reverse to the rotational direction CC at the peripheral speed in accordance with the conveyance speed.

Accordingly, the W cigarette 12 tends to move on the outer peripheral surface of the perforating drum 20 in a direction (i.e., upstream direction of the conveyance path) reverse to the rotational direction CC of the perforating drum 20. However, such a movement of the W cigarette 12 is offset by the movement of the outer peripheral surface of the perforating drum 20; thus the W cigarette 12 stays at the perforating position PP while rotating in the rotational direction C at the perforating position PP.

Specifically, the perforating drum 20 includes a number of elongated protrusions on the outer peripheral surface thereof. These elongated protrusions are arranged at regular intervals in the peripheral direction of the perforating drum 20, and each of the elongated protrusions extends in the lateral a width direction of the perforating drum 20. Each interval between two adjacent elongated protrusions in the peripheral direction of the perforating drum 20 provides a rolling area for the W cigarette 12 on the outer peripheral surface of the perforating drum 20.

FIG. 5 shows a plan view of the outer peripheral surface of the perforating drum 20, and a reference numeral 52 is provided to each elongated protrusion of the perforating drum 20 in FIG. 5. Subscripts 0, 1, 2 ... added to corresponding elongated protrusions 52 indicate the appearing order of the elongated protrusions 52 that sequentially appear on the outer peripheral surface of the perforating drum 20 shown in FIG. 5 in accordance with the rotation of the perforating drum 20.

Each elongated protrusion 52 has two side surfaces facing to a reverse direction each other with respect to the rotational direction of the perforating drum 20, and respective root regions of the two side surfaces are formed as an upstream holding seat and a downstream holding seat for selectively holding the W cigarette 12, if viewed in the rotational direction of the perforating drum 20. These upstream and the downstream holding seats may hold the W cigarette 12 by means of suction, for example.

As shown in FIG. 5(A), a current status is such that a leading elongated protrusion 52₀ has just passed through the perforating position PP, that is, passed by the pair of rotary cams 50, and a subsequent elongated protrusion 52₁ is on the way of moving toward the perforating position PP. Now, it is assumed that the elongated protrusion 52₁ holds the W cigarette 12 on its upstream holding seat by means of suction. As aforementioned, the W cigarette 12 is transferred from the upstream grooved drum to the perforating drum 20 to be conveyed in accordance with the rotation of the perforating drum 20.

When the rotation of the perforating drum 20 further progresses, and then the W cigarette 12 reaches the perforating position PP as shown in FIG. 5(B), the two cigarettes 14 of the W cigarette 12 come to be held between the rotary cams 50 and the outer peripheral surface of the perforating drum 20 or the upstream holding seat of the elongated protrusion 52₁.

At this point, the suction supply to the upstream holding seat is stopped to release the W cigarette 12 from the above holding. Meanwhile, as apparent from the above description, the rotational direction of each rotary cam 50 is the same as the rotational direction of the perforating drum 20; therefore, when the pair of rotary cams 50 come into contact with the outer peripheral surface of the W cigarette 12, these rotary cams 50 kick out the W cigarette 12 from the upstream holding seat of the elongated protrusion 52₁ toward the upstream in the conveyance direction of the W cigarette 12; and as shown in FIG. 5(C), the W cigarette 12 is allowed to rotate on its own axis on the outer peripheral surface of the perforating drum 20 while being held between the pair of rotary cams 50 and the perforating drum 20.

Specifically, the pair of rotary cams 50 are provided with a plurality of kick-out claws (not shown) on each outer peripheral surface thereof, and a pair of the kick-out claws pass through the perforating position PP at the timing when the W cigarette 12 reaches the perforating position PP, and kick out the W cigarette 12.

As described above, because the peripheral speed of the pair of rotary cams 50 is identical with the peripheral speed of the perforating drum 20, the rotation of the W cigarette 12 is carried out while the W cigarette 12 stays at the perforating position PP even if the rotation of the perforating drum 20 progresses.

When the rotation of the perforating drum 20 further progresses, and a subsequent elongated protrusion 52₂ passes through the perforating position PP, the elongated protrusion 52₂ pushes out the W cigarette 12 held between the pair of rotary cams 50 and the perforating drum 20 toward the downstream from the perforating position PP, and at the same time, holds the W cigarette 12 on the downstream holding seat thereof by means of suction. Thereafter, as shown in FIG. 5(D), the W cigarette 12 is conveyed by the rotation of the perforating drum 20 while being held on the downstream holding seat of the elongated protrusion 52₂, and then is transferred from the perforating drum 20 to the downstream grooved drum adjacent to the perforating drum 20.

As apparent from the above description, while the W cigarette 12 is allowed to be rotating at the perforating position PP, the branched laser beams B_{L}, B_{R} are radiated in a pulse fashion onto the respective outer peripheral surfaces of the left and the right parts 16_{L}, 16_{R} of the double filter 16, thereby forming the perforation rows 13 in the respective outer peripheral surfaces of the left and the right parts 16_{L}, 16_{R}.

In FIG. 5, for simplicity of the drawing, the double filter cigarette 12 is shown only between the elongated protrusions 52₁ and 52₂.

The present description is not limited to the laser perforating machine 10 of the first embodiment, and various modifications can be made.

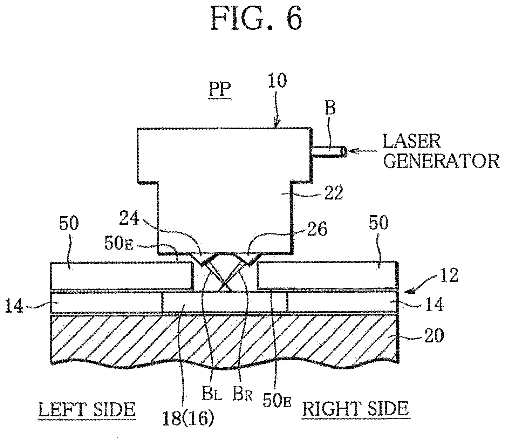

FIG. 6 shows the laser perforating machine 10 according to the second embodiment.

The laser perforating machine 10 according to the second embodiment is different from the laser perforating machine 10 of the first embodiment in that the aforementioned pair of rotary cams 50 have extensions 50_{E} that are respective parts of the rotary cams 50, each extensions extending below the housing 22 in a manner as to rotatably contact the double filter 16 of the W cigarette 12.

The respective extensions 50_{E} are in contact with the double filter 16 of the W cigarette 12 at the perforating position PP, and rotate consistent with the rotation of the W cigarette 12; therefore the extensions 50_{E} never hinder the rotation of the W cigarette 12. While forming the perforation rows 13, the extensions 50_{E} provide a pressing device for pressing the double filter 16 against the outer peripheral surface of the perforating drum 20. This means that the pair of rotary cams 50 also serve as the pressing device in the case of the second embodiment.

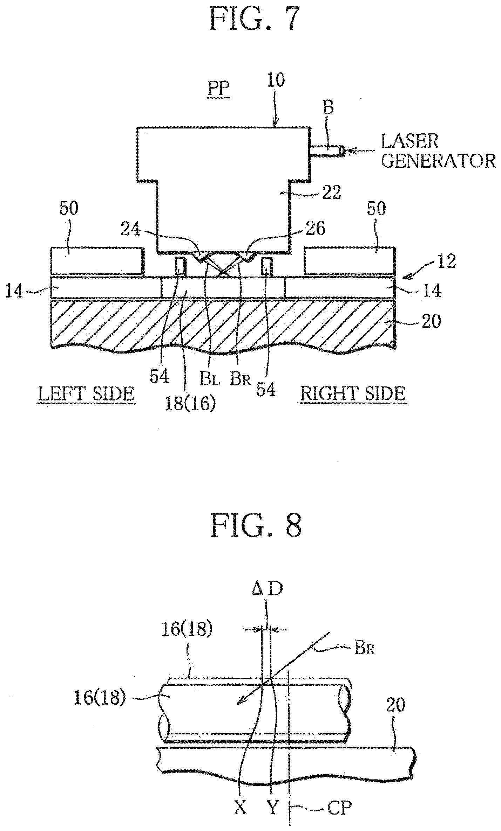

FIG. 7 shows the laser perforating machine of the third embodiment.

The laser perforating machine 10 of the third embodiment is different from the laser perforating machine 10 of the first embodiment in that the laser perforating machine 10 includes a pair of pressing rollers 54 serving as the above described pressing device at the lower surface of the housing 22. Each of the pair of pressing rollers 54 has a smaller diameter than that of each of the pair of rotary cams 50, and is disposed immediately under the housing 22 at a position outward of the left or the right laser-beam emitting ports 24, 26. The pressing rollers 54 have a rotational axis different from that of the rotary cams 50; the rotational axis of the pressing rollers 54 synchronously rotates with the rotation of the rotary cams 50; and the pressing rollers 54 are connected to a driving mechanism for rotating the pressing rollers 54 at a peripheral speed identical with the peripheral speed of the rotary cams 50, or are rotatably supported by means of the housing 22.

When the W cigarette 12 is located at the perforating position PP, the pair of pressing rollers 54 rotatably contact the double filter 16 of the W cigarette 12 in the same manner as the pair of rotary cams 50, or co-rotates together with the rotation of the W cigarette 12; while the perforation rows 13 are being formed without hindering the rotation of the W cigarette 12, the pair of pressing rollers 54 press the double filter 16 against the outer peripheral surface of the perforating drum 20 in the same manner as the extensions 50_{E} of the pair of rotary cams 50.

The extensions 50_{E} of the second embodiment and the pressing rollers 54 of the third embodiment prevent a portion of the double filter 16 where the perforation rows 13 are to be formed from lifting up from the outer peripheral surface of the perforating drum 20 while the W cigarette 12 rotates on its axis at the perforating position PP, and maintain a constant distance in the radial direction of the perforating drum 20 between a target position where each perforation row 13 is formed in the outer peripheral surface of the double filter 16, and each of the left and the right laser-beam emitting ports 24, 26.

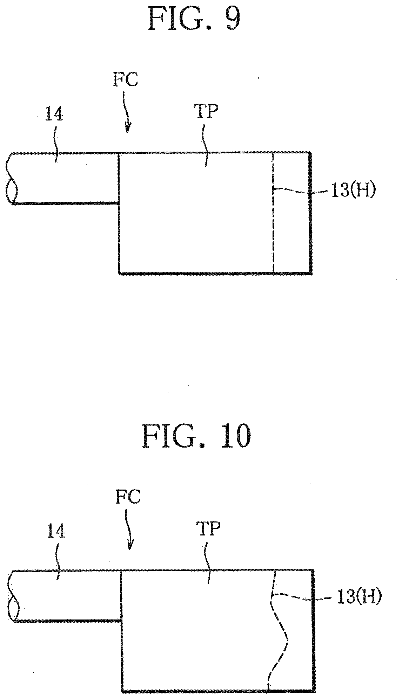

As a result, exemplifying the branched laser beam B_{R}, for example, as shown in FIG. 8, a focal position of the branched laser beam B_{R} can be accurately adjusted to the target position X having a constant distance from the cutting position CP on the outer peripheral surface of the double filter 16, so that the perforation row 13 is formed without being meandered as shown in FIG. 9. FIG. 9 shows a filter cigarette FC obtained by cutting the W cigarette 12 in a state in which its tipping paper TP is developed.

As shown by a two-dot and dash line in FIG. 8, if the portion where the perforation row 13 is to be formed is shifted upward, the branched laser beam B_{R} is radiated to an radiating position Y displaced from the target position X toward the cutting position CP. A deviation ΔD between the target position X and the radiating position Y causes meandering of the perforation row 13, as shown in FIG. 10. FIG. 10 shows the filter cigarette FC in the same state as that in FIG. 9.

As apparent from the above description, one of factors to cause such meandering of the perforation row 13 is upward displacement of the portion where the perforation row 13 is to be formed, and in order to prevent such upward displacement, it is preferable to set respective contact positions of the extensions 50_{E} or the pressing rollers 54 with the outer peripheral surface of the double filter 16 to be as close as possible to the target position X, and a distance between each contact position and the target position X should be within a range of 5 mm, for example.

Meanwhile, such meandering of the perforation row 13 may also result from a low roundness of the double filter 16 other than the aforementioned upward displacement. However, by pressing the double filter 16 against the outer peripheral surface of the perforating drum 20 with the extensions 50_{E} or the pressing rollers 54, serving as the pressing device, it is possible to maintain a constant distance between the outer peripheral surface of the perforating drum 20 and the target position X, thereby preventing the meandering of the perforation row 13 resulting from a low roundness of the double filter 16.

Both of the extensions 50_{E} and the pressing rollers 54 are effective for preventing the meandering of the perforation row 13. In the second embodiment, the extensions 50_{E} are parts of the rotary cams 50, and thus it is unnecessary to prepare new additional components for the pressing device. Hence, the laser perforating machine of the second embodiment requires less components, resulting in a simple structure.

On the other hand, the pressing rollers 54 of the third embodiment have such a simple structure that reduces the diameter of each roller as well as enhances flexibility in engineering design for space underneath the housing 22, where sufficient space is hardly reserved.

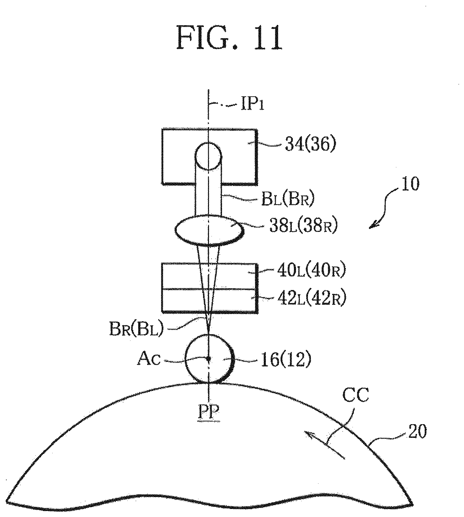

FIG. 11 shows the laser perforating machine 10 of the fourth embodiment.

In the fourth embodiment, the first mirrors 40_{L}, 40_{R} have respective reflecting surfaces that are opposite to each other; and the second mirrors 42_{L}, 42_{R} also have respective reflecting surfaces that are opposite to each other. In this case, the optical paths of the branched laser beams B_{L}, B_{R} intersect each other in the aforementioned first plane IP₁.

This configuration facilitates arrangement of the first mirrors 40 and the second mirrors 42, and also facilitates adjustment of the optical paths, and thus this configuration is effective even though the optical paths, that is, the branched laser beams B_{L}, B_{R} intersect each other as far as no bad influences are caused to the formation of the perforation rows 13.

FIG. 12 shows the laser perforating machine 10 of the fifth embodiment.

In the case of the fifth embodiment, in the optical path of the branched laser beam B_{L}, only a single mirror 56_{L} is disposed below the converging lens 38_{L} as shown in FIG. 12. Accordingly, the branched laser beam B_{L} is reflected on the mirror 56_{L} only once, and travels toward the right laser-beam emitting port 26, and is converged via the right laser-beam emitting port 26 onto the left part 16_{L} of the double filter 16, thereby forming the perforations H or the perforation row 13 into the left part 16_{L}. In the present embodiment, the angle setting mirror of the left-sided laser-beam radiating unit is formed by the mirror 56_{L}.

On the other hand, in the optical path of the branched laser beam B_{R}, only a single mirror 56_{R} is disposed below the converging lens 38_{R}, the branched laser beam B_{R} is reflected on the mirror 56_{R} only once, and travels toward the left laser-beam emitting port 24, and then is converged via the left laser-beam emitting port 24 onto the right part 16_{R} of the double filter 16, thereby forming the perforations H or, the perforation row 13 into the right part 16_{R}. In the present embodiment, the angle setting mirror of the right-sided laser-beam radiating unit is formed by the mirror 56_{R}.

In this case, the adjusting unit 46 adjusts the position and the angle of the mirror 56_{L}, and the adjusting unit 48 adjusts the position and the angle of the mirror 56_{R}.

In the case of the laser perforating machine 10 of the fifth embodiment, the branched laser beam B_{R} emitting from the left laser-beam emitting port 24 forms the perforations H or the perforation row 13 into the right part 16_{R} of the double filter 16, and the branched laser beam B_{L} emitting from the right laser-beam emitting port 26 forms the perforations H or the perforation row 13 into the left part 16_{L} of the double filter 16.

In each of the aforementioned embodiments, the laser splitter 32 is used, but the laser perforating machine 10 may include respective laser generators for generating the laser beam B_{L} and the laser beam B_{R} instead. The conveyance path for the W cigarette 12 may be defined by a belt conveyor instead of a series of the grooved drums. In addition, in order to form two or more perforation rows 13 in each of the left and right filter cigarettes FC to be produced from the W cigarette 12, two or more laser beams may be respectively radiated onto the left and the right parts 16_{L}, 16_{R} of the double filter 16.

### Explanation of Reference Signs

- 10:: laser perforating machine
- 12:: double filter cigarette (W cigarette)
- 13:: perforation row
- 14:: cigarette
- 16:: double filter
- 16_{L}:: left part
- 16_{R}:: right part
- 18:: double tipping paper
- 20:: perforating drum (conveyance path)
- 22:: housing
- 24:: left laser-beam emitting port
- 26:: right laser-beam emitting port
- 28:: left-sided laser-beam radiating unit
- 30:: right-sided laser-beam radiating unit
- 32:: laser splitter
- 34:: half mirror
- 36:: reflecting mirror
- 38_{L}, 38_{R}:: converging lens
- 40_{L}, 40_{R}:: first mirror (angle setting mirror)
- 42_{L}, 42_{R}:: second mirror (angle setting mirror)
- 46, 48:: adjusting unit
- 50:: rotary cam (rotating unit)
- 50_{E}:: extension (pressing device)
- 52:: elongated protrusion
- 54:: pressing roller (pressing device)
- 56_{L}, 56_{R}:: mirror (angle forming mirror)
- A_{C}:: axis
- B:: laser beam
- B_{L}, B_{R}:: branched laser beam (optical path)
- CP:: cutting position
- PP:: perforating position

The invention is set out in the claims that follow:

## Claims

1. A laser perforating machine (10) for perforating a double filter cigarette (12) including a double filter (16) disposed between two cigarettes (14), the double filter cigarette (12) being formed by combining the cigarettes (14) with the double filter (16) by wrapping a double tipping paper (18) therearound, wherein the double filter cigarette is divided into a left part (16_{L}) located on the left side and a right part (16_{R}) located on the right side relative to a cutting position (CP) defined at a center of the double filter (16), the laser perforating machine comprising
a laser-beam radiating device that converges laser beams (B_{L}, B_{R}) respectively to the left part (16_{L}) and the right part (16_{R}) of the double filter (16) during conveyance of the double filter cigarette (12) along a conveyance path,
**characterized in that**
the laser-beam radiating device is arranged at a perforating position (PP) defined in the conveyance path, and
the laser-beam radiating device comprises:
a left-sided laser-beam radiating unit (28) that includes a left laser-beam emitting port (24) so located on the left part side of the double filter (16) at the perforating positon (PP) as to allow a laser beam (B_{L}) to emit therefrom, and converges the laser beam (B_{L}) to the right part (16_{R}) of the double filter (16) through the left laser-beam emitting port (24) when the double filter cigarette (12) is located at the perforating position, thereby forming perforations (H) tilting to an axis of the double filter cigarette (12) into the right part (16_{R}); and
a right-sided laser-beam radiating unit (30) that includes a right laser-beam emitting port (26) so located on the right part side of the double filter (16) at the perforating positon (PP) as to allow a laser beam (B_{R}) to emit therefrom, and converges the laser beam (B_{R}) to the left part (16_{L}) of the double filter (16) through the right laser-beam emitting port (26) when the double filter cigarette (12) is positioned at the perforating position (PP), thereby forming perforations (H) tilting to the axis into the left part (16_{L}).

2. The laser perforating machine (10) according to claim 1, wherein
the left-sided laser-beam radiating unit (28) converges the laser beam (B_{L}) to the right part (16_{R}) of the double filter (16) within a range of less than 10 mm apart from the cutting position (CP), and
the right-sided laser-beam radiating unit (30) converges the laser beam (B_{R}) to the left part (16_{L}) of the double filter (16) within a range of less than 10 mm apart from the cutting position (CP).

3. The laser perforating machine (10) according to claim 2, wherein
each of the left-sided laser-beam radiating unit (28) and the right-sided laser-beam radiating unit (30) includes:
a converging lens (38_{L}, 38_{R}) that converges the laser beam (B_{L}, B_{R}); and
an angle setting mirror (40_{L}, 40_{R}; 42_{L}, 42_{R}) that reflects the laser beam (B_{L}, B_{R}) in a manner as to radiate the laser beam (B_{L}, B_{R}) tilting to the axis of the double filter cigarette (12).

4. The laser perforating machine (10) according to claim 3, wherein
the angle setting mirror (40_{L}, 40_{R}; 42_{L}, 42_{R}) has two or more mirrors.

5. The laser perforating machine (10) according to claim 4, wherein
the angle setting mirrors (40_{L}, 40_{R}; 42_{L}, 42_{R}) of the left-sided laser-beam radiating unit (28) and the right-sided laser-beam radiating unit (30) are so arranged as to prevent the respective optical paths of the left-sided laser-beam radiating unit (28) and the right-sided laser-beam radiating unit (30) from intersecting each other.

6. The laser perforating machine (10) according to any one of claims 1 to 5, wherein
the laser perforating machine (10) further comprises a rotating unit (50) that rotates the double filter cigarette (12) around the axis thereof,
the left-sided laser-beam radiating unit (28) and the right-sided laser-beam radiating unit (30) respectively radiate the laser beams (B_{L}, B_{R}) in a pulse fashion, and
the laser perforating machine (10) further comprises a pressing device (54) that presses the double filter (16) against the conveyance path when the double filter cigarette (12) is rotated around the axis thereof at the perforating position (PP).

7. The laser perforating machine (10) according to claim 6, wherein
the rotating unit includes a pair of rotary cams (50) that hold the cigarettes (14) of the double filter cigarette (12) between the conveyance path and the respective rotary cams (50) at the perforating position (PP), and rotate the double filter cigarette (12) at a peripheral speed identical with a conveyance speed of the double filter cigarette (12) on the conveyance path in a direction of moving upstream of the conveyance path, and
the pressing device includes a pair of rollers (54) for rotatably contacting the respective left and right parts (16_{L}, 16_{R}) of the double filter (16).

8. The laser perforating machine (10) according to claim 6, wherein
the rotating unit includes a pair of rotary cams (50) that hold the cigarettes (14) of the double filter cigarette (12) between the conveyance path and the rotary cams (50) at the perforating position (PP), and rotate the double filter cigarette (12) at a peripheral speed identical with a conveyance speed of the double filter cigarette (12) on the conveyance path in a direction of moving upstream of the conveyance path, and
the pressing device includes extensions (50_{E}) of the rotary cams (50) for rotatably contacting the respective left and right parts (16_{L}, 16_{R}) of the double filter (16).

## Patentansprüche

1. Laserperforationsmaschine (10) zum Perforieren einer doppelten Filterzigarette (12) mit doppeltem Filter (16), der zwischen zwei Zigaretten (14) angeordnet ist, wobei die doppelte Filterzigarette (12) gebildet wird, indem die Zigaretten (14) mit dem doppelten Filter (16) verbunden werden, indem dieser mit einem doppelten Mundstückpapier (18) umwickelt wird, wobei die doppelte Filterzigarette in einen linken Teil (16_{L}), der sich links befindet, und einen rechten Teil (16_{R}), der sich rechts bezüglich einer Schneidposition (CP) befindet, die in einer Mitte des doppelten Filters (16) definiert ist, wobei die Laserperforationsmaschine umfasst:
eine laserstrahlabgebende Vorrichtung, die Laserstrahlen (B_{L}, B_{R}) während der Förderung der doppelten Filterzigarette (12) auf einem Förderweg jeweils auf den linken Teil (16_{L}) und den rechten Teil (16_{R}) des doppelten Filters (16) konvergiert,
**dadurch gekennzeichnet, dass**
die laserstrahlabgebende Vorrichtung in einer im Förderweg definierten Perforationsposition (PP) angeordnet ist und
die laserstrahlabgebende Vorrichtung umfasst:
eine linksseitige laserstrahlabgebende Einheit (28), die eine linke laserstrahlabgebende Öffnung (24) enthält, die so an der Perforationsposition (PP) an linken Seite des doppelten Filters (16) positioniert ist, dass sie es einem Laserstrahl (B_{L}) ermöglicht, daraus abgestrahlt zu werden, und den Laserstrahl (B_{L}) durch die linke laserstrahlabgebende Öffnung (24) auf den rechten Teil (16_{R}) des doppelten Filters (16) konvergiert, wenn sich die doppelte Filterzigarette (12) an der Perforationsposition befindet, und dadurch Perforationen (H) bildet, die von einer Achse der doppelten Filterzigarette (12) in den rechten Teil (16_{R}) geneigt sind; und
eine rechtsseitige laserstrahlabgebende Einheit (30), die eine rechte laserstrahlabgebende Öffnung (26) enthält, die so an der Perforationsposition (PP) an der rechten Seite des doppelten Filters (16) positioniert ist, dass sie es einem Laserstrahl (B_{R}) ermöglicht, daraus abgestrahlt zu werden, und den Laserstrahl (B_{R}) durch die rechte laserstrahlabgebende Öffnung (26) auf den linken Teil (16_{L}) des doppelten Filters (16) konvergiert, wenn die doppelte Filterzigarette (12) an der Perforationsposition (PP) positioniert ist, und dadurch Perforationen (H) bildet, die von einer Achse in den linken Teil (16_{L}) geneigt sind.

2. Laserperforationsmaschine (10) nach Anspruch 1, wobei
die linke laserstrahlabgebende Einheit (28) den Laserstrahl (B_{L}) auf den rechten Teil (16_{R}) des doppelten Filters (16) innerhalb eines Bereichs von weniger als 10 mm von der Schneidposition (CP) entfernt konvergiert, und
die rechte laserstrahlabgebende Einheit (30) den Laserstrahl (B_{R}) auf den linken Teil (16_{L}) des doppelten Filters (16) innerhalb eines Bereichs von weniger als 10 mm von der Schneidposition (CP) entfernt konvergiert.

3. Laserperforationsmaschine (10) nach Anspruch 2, wobei
jede von der linken laserstrahlabgebenden Einheit (28) und der rechten laserstrahlabgebenden Einheit (30) beinhaltet:
eine Sammellinse (38_{L}, 38_{R}), die den Laserstrahl (B_{L}, B_{R}) konvergiert; und
einen Winkeleinstellspiegel (40_{L}, 40_{R}; 42_{L}, 42_{R}), der den Laserstrahl (B_{L}, B_{R}) in einer Weise verstellt, so dass der Laserstrahl (B_{L}, B_{R}) zur Achse der doppelten Filterzigarette (12) geneigt ist.

4. Laserperforationsmaschine (10) nach Anspruch 3, wobei der Winkeleinstellspiegel (40_{L}, 40_{R}; 42_{L}, 42_{R}) zwei oder mehr Spiegel aufweist.

5. Laserperforationsmaschine (10) nach Anspruch 4, wobei die Winkeleinstellspiegel (40_{L}, 40_{R}; 42_{L}, 42_{R}) der linken laserstrahlabgebenden Einheit (28) und der rechten laserstrahlabgebenden Einheit (30) so angeordnet sind, dass sie verhindern, dass sich die jeweiligen Strahlwege der linken laserstrahlabgebenden Einheit (28) und der rechten laserstrahlabgebenden Einheit (30) schneiden.

6. Laserperforationsmaschine (10) nach einem der Ansprüche 1 bis 5, wobei
die Laserperforationsmaschine (10) ferner eine rotierende Einheit (50) umfasst, die die doppelte Filterzigarette (12) um ihre Achse dreht,
die linke laserstrahlabgebenden Einheit (28) und die rechte laserstrahlabgebenden Einheit (30) jeweils die Laserstrahlen (B_{L}, B_{R}) gepulst abgeben; und
die Laserperforationsmaschine (10) ferner eine Druckvorrichtung (54) umfasst, die den doppelten Filter (16) gegen den Förderweg drückt, wenn die doppelte Filterzigarette (12) an der Perforationsposition (PP) um ihre Achse gedreht wird.

7. Laserperforationsmaschine (10) nach Anspruch 6, wobei
die rotierende Einheit ein Paar rotierende Nocken (50) aufweist, die die Zigaretten (14) der doppelten Filterzigarette (12) an der Perforationsposition (PP) zwischen dem Förderweg und den jeweiligen drehenden Nocken (50) halten und die doppelte Filterzigarette (12) mit einer Umfangsgeschwindigkeit drehen, die mit einer Fördergeschwindigkeit der doppelten Filterzigarette (12) auf dem Förderweg in einer Richtung zum nachgelagerten Bereich des Förderwegs identisch ist, und
die Druckvorrichtung in Paar Walzen (54) aufweist, um drehbar den jeweiligen linken und rechten Teil (16_{L}, 16_{R}) des doppelten Filters (16) zu kontaktieren.

8. Laserperforationsmaschine (10) nach Anspruch 6, wobei
die rotierende Einheit ein Paar rotierende Nocken (50) aufweist, die die Zigaretten (14) der doppelten Filterzigarette (12) an der Perforationsposition (PP) zwischen dem Förderweg und den jeweiligen drehenden Nocken (50) halten und die doppelte Filterzigarette (12) mit einer Umfangsgeschwindigkeit drehen, die mit einer Fördergeschwindigkeit der doppelten Filterzigarette (12) auf dem Förderweg in einer Richtung zum nachgelagerten Bereich des Förderwegs identisch ist, und
die Druckvorrichtung Erweiterungen (50_{E}) der rotierenden Nocken (50) aufweist, um drehbar den jeweiligen linken und rechten Teil (16_{L}, 16_{R}) des doppelten Filters (16) zu kontaktieren.

## Revendications

1. Machine de perforation laser (10) pour perforer une cigarette à double filtre (12) comprenant un double filtre (16) disposé entre deux cigarettes (14), la cigarette à double filtre (12) étant formée en combinant les cigarettes (14) avec le double filtre (16) en enveloppant un double papier filtre (18) autour d'eux, laquelle cigarette à double filtre est divisée en une partie gauche (16_{L}) située sur le côté gauche et une partie droite (16_{R}) située sur le côté droit par rapport à une position de découpe (CP) définie à un centre du double filtre (16), laquelle machine de perforation laser comprend :
un dispositif émetteur de faisceau laser qui converge des faisceaux laser (B_{L}, B_{R}) respectivement vers la partie gauche (16_{L}) et la partie droite (16_{R}) du double filtre (16) pendant le transport de la cigarette à double filtre (12) le long d'un trajet de transport ;
**caractérisé en ce que** :
le dispositif émetteur de faisceau laser est situé en une position de perforation (PP) définie dans le trajet de transport ; et
le dispositif émetteur de faisceau laser comprend :
- une unité émettrice de faisceau laser côté gauche (28) qui comprend un port d'émission de faisceau laser gauche (24) disposé sur le côté gauche du double filtre (16) au niveau de la position de perforation (PP) afin qu'un faisceau laser (B_{L}) puisse en être émis et qui converge le faisceau laser (B_{L}) vers la partie droite (16_{R}) du double filtre (16) via le port d'émission de faisceau laser gauche (24) lorsque la cigarette à double filtre (12) se situe à la position de perforation, formant ainsi des perforations (H) basculant sur un axe de la cigarette à double filtre (12) dans la partie droite (16_{R}) ; et
- une unité émettrice de faisceau laser côté droit (30) qui comprend un port d'émission de faisceau laser droit (26) disposé sur le côté droit du double filtre (16) au niveau de la position de perforation (PP) afin qu'un faisceau laser (B_{R}) puisse en être émis et qui converge le faisceau laser (B_{R}) vers la partie gauche (16_{L}) du double filtre (16) via le port d'émission de faisceau laser droit (26) lorsque la cigarette à double filtre (12) se situe à la position de perforation (PP), formant ainsi des perforations (H) basculant sur l'axe dans la partie gauche (16_{L}).

2. Machine de perforation laser (10) selon la revendication 1, dans laquelle :
- l'unité émettrice de faisceau laser côté gauche (28) converge le faisceau laser (B_{L}) vers la partie droite (16_{R}) du double filtre (16) dans une plage de moins de 10 mm par rapport à la position de découpe (CP) ; et
- l'unité émettrice de faisceau laser côté droit (30) converge le faisceau laser (B_{R}) vers la partie gauche (16_{L}) du double filtre (16) dans une plage de moins de 10 mm par rapport à la position de découpe (CP).

3. Machine de perforation laser (10) selon la revendication 2, dans laquelle :
chacune de l'unité émettrice de faisceau laser côté gauche (28) et de l'unité émettrice de faisceau laser côté droit (30) comprend :
- une lentille convergente (38_{L}, 38_{R}) qui converge le faisceau laser (B_{L}, B_{R}) ; et
- un miroir de définition d'angle (40_{L}, 40_{R} ; 42_{L}, 42_{R}) qui réfléchit le faisceau laser (B_{L}, B_{R}) de manière à émettre le faisceau laser (B_{L}, B_{R}) basculant vers l'axe de la cigarette à double filtre (12).

4. Machine de perforation laser (10) selon la revendication 3, dans laquelle le miroir de définition d'angle (40_{L}, 40_{R} ; 42_{L}, 42_{R}) comprend deux miroirs ou plus.

5. Machine de perforation laser (10) selon la revendication 4, dans laquelle les miroirs de définition d'angle (40_{L}, 40_{R} ; 42_{L}, 42_{R}) de l'unité émettrice de faisceau laser côté gauche (28) et de l'unité émettrice de faisceau laser côté droit (30) sont disposés de manière à empêcher que les trajets optiques respectifs de l'unité émettrice de faisceau laser côté gauche (28) et de l'unité émettrice de faisceau laser côté droit (30) se croisent.

6. Machine de perforation laser (10) selon l'une quelconque des revendications 1 à 5, dans laquelle :
- la machine de perforation laser (10) comprend en outre une unité de rotation (50) qui fait tourner la cigarette à double filtre (12) autour de son axe ;
- l'unité émettrice de faisceau laser côté gauche (28) et l'unité émettrice de faisceau laser côté droit (30) émettent respectivement les faisceaux laser (B_{L}, B_{R}) de manière pulsée ; et
- la machine de perforation laser (10) comprend en outre un dispositif de presse (54) qui presse le double filtre (16) contre le trajet de transport lorsque la cigarette à double filtre (12) tourne autour de son axe à la position de perforation (PP).

7. Machine de perforation laser (10) selon la revendication 6, dans laquelle :
- l'unité de rotation comprend une paire de cames rotatives (50) qui maintiennent les cigarettes (14) de la cigarette à double filtre (12) entre le trajet de transport et les cames rotatives (50) respectives au niveau de la position de perforation (PP) et font tourner la cigarette à double filtre (12) à une vitesse périphérique identique à une vitesse de transport de la cigarette à double filtre (12) sur le trajet de transport dans une direction allant vers l'amont du trajet de transport ; et
- le dispositif de presse comprend une paire de galets (54) entrant en contact rotatif avec les parties gauche et droite (16_{L}, 16_{R}) respectives du double filtre (16).

8. Machine de perforation laser (10) selon la revendication 6, dans laquelle :
- l'unité de rotation comprend une paire de cames rotatives (50) qui maintiennent les cigarettes (14) de la cigarette à double filtre (12) entre le trajet de transport et les cames rotatives (50) au niveau de la position de perforation (PP) et font tourner la cigarette à double filtre (12) à une vitesse périphérique identique à une vitesse de transport de la cigarette à double filtre (12) sur le trajet de transport dans une direction allant vers l'amont du trajet de transport ; et
- le dispositif de presse comprend des extensions (50_{E}) des cames rotatives (50) pour entrer en contact rotatif avec les parties gauche et droite (16_{L}, 16_{R}) respectives du double filtre (16).
